# EUROPEAN PATENT APPLICATION

(11) **EP 1 830 314 A1**
(43) Date of publication of application: **05.09.2007**
(21) Application number: 05791750.2
(22) Date of filing: 20.09.2005
(51) Int. Cl.: G06Q 10/00

(54) **A MODULE OF ARCHITECTURE ENGINEERING MODELING AND SYSTEM AND METHOD THEREOF**

(30) Priority: 20.09.2004 CN 200410077932
(71) Applicant: Liu, Shoukui, Shandong 271000 (CN)
(72) Inventor: Liu, Shoukui, Shandong 271000 (CN)
(74) Representative: Delumeau, François Guy
(86) International application number: PCT/CN2005/001513
(87) International publication number: WO 2006/032197

(57) **Abstract**

The present invention discloses a module of architecture engineering modeling and system and method thereof. The inputted architecture component describing data includes the architecture component plane locating character string because the architecture component describing data is inputted by electric worksheet. During the inputting, the system interprets the character string into geometric shape and locating point data, and generates and displays the component graphic object, and interprets the architecture component image object files into the architecture component describing data files when the system is used. The system comprises handheld PC terminals, which collect data from the blueprint and collaborate with the computer mainframe. The memory capacity of the architecture component describing data is very small so that it's simple as the data object of interactive editing, storage and transmission rather than the architecture component graphic object and can be used in networks with various transmission rate. Therefore, the present invention simplifies complex inputting process and improves the user's operating efficiency.

## Description

### FIELD OF THE INVENTION

The present invention relates to a module of architecture engineering modeling and system and method thereof, particularly to a module, system and method for establishing and editing a architecture digital model, and the present invention belongs to a field of computer aided design (CAD).

### BACKGROUND OF THE INVENTION

At present, most methods for establishing architecture engineering models on a computer utilize a computer aided design (CAD) system to interactively establish architecture digital models in a manner of drawing. The main operation procedure for such method is to directly handle a graphic object on a display screen, and the aided operation procedure is to input the text or characters (for example, the component name) if required. A typical software product utilizing such method is, for example, the famous AutoCAD. The characteristics of such methods are intuitive and flexible so that such methods can be popularly used in the field of computer aided design. However, such methods have defects as follows: (1) in the process of directly handling graphics, a graphic cursor has to be controlled frequently to accurately find and determine the position of an architecture component locating point in 2D space of the display screen, but in such graphics operations, the operator is required to have relatively high ability for controlling a mouse, and the operator is easy tired due to such operations; (2) in effective operations such as controlling the cursor to determine a component locating point etc, the graphical representation area on the display screen has to be frequently modified so as to meet operation requirements due to the factors that the size of a display screen is generally much smaller than that of a design blueprint and that the resolution of the display screen is limited, etc. Moreover, operation efficiency is low due to the necessary switching frequently performed between the use of a mouse and a keyboard; (3) the whole operation process is relatively complex since the graphics having different shapes involve different parameters and different ways for inputting the parameters, thus the operator is required to have sufficient knowledge for handling graphics. In practice, such methods also meet relative serious challenges in the fields except engineering design.

Technicians in the fields except engineering design generally have the ability to view and read drawing, however they do not have the ability to utilize a CAD system. Furthermore, technicians in the fields except engineering design are not adapted to a CAD modeling system in a manner of drawing, because the modeling process is to copy the content of an architecture engineering design blueprint to a computer and such modeling process is quite different from the process of using the modeling method of CAD for engineering design. On the other hand, an architecture engineering design blueprint represents complete information of every architecture component through a plurality of pieces of drawing paper, and the size of each piece is generally A2, A2+, A1, or A1+. Therefore, blueprint at hand has to be frequently changed if a modeling method and system of the prior art is used, so that the modeling efficiency is lowered.

Accordingly, a simpler engineering modeling method is definitely needed for satisfying informatization application in various relevant fields except engineering design.

### SUMMARY OF THE INVENTION

Based on the technical means and technical effects of the engineering modeling systems disclosed previously, the present invention is particularly used to solve the following problems.
(1) Allowing an operator to input the design information of an engineering blueprint to a computer based on software and hardware system of the computer;
(2) Allowing an operator to record all accurate information in a piece of drawing paper to the computer without referring to other engineering design blueprints when performing the operations of engineering modeling on a single computer, though complete information of each architecture component is distributed on different pages of the design blueprints;
(3) Allowing several persons to record different engineering design blueprints, respectively, on several clients connecting with each other via various type of networks, in consideration of the fact that a complete set of engineering design blueprints consists of several pages;
(4) Allowing an operator to copy information of an engineering design from design blueprints by using a handheld personal computer (HPC), in consideration of the fact that the sizes of engineering design blueprints are relatively large generally.

In order to achieve the above purposes, the invention provides an engineering modeling system. The system comprises: architecture component describing data containing an plane locating string field and other characteristic fields of the architecture component; an architecture component describing data editor for generating or editing architecture component describing data, and transferring the generated or edited architecture component describing data to the architecture component describing data interpreter; an architecture component describing data interpreter for interpreting the plane locating string field and the other characteristic fields of the architecture component to corresponding component plane shape describing data and locating point coordinates, and transferring the corresponding component plane shape describing data and locating point coordinates to the digital model generator of the architecture; and an architecture digital model generator for generating or updating an architecture component graphic object; and displaying the architecture component graphic object by a display.

Said system may further comprise a blueprint data collector for editing the architecture component describing data. Wherein the architecture component describing data editor and the blueprint data collector can cooperate, or can operate separately.

According to said system, the blueprint data collector may be a handheld personal computer, and coupled to the architecture component describing data interpreter.

According to said system, the architecture component plane locating string is in conformity with principles and elements of architecture component plane locating rules.

The invention also provides an architecture engineering modeling method. The method is used to establish an architecture digital model by inputting design content in design blueprint of an architecture engineering into a computer. The method comprises the following steps:
a step of interactive modeling: establishing a describing data record which comprises an plane locating string field and other characteristic fields of an architecture component by using an architecture component describing data editor and/or a blueprint data collector; editing the describing data record by using the architecture component describing data editor and/or the blueprint data collector; interpreting the describing data record into plane shape describing data and locating point data of the architecture component relating to the describing data record by using an architecture component describing data interpreter; generating or updating, according to the interpreted plane shape describing data and locating point data, a graphic object of the architecture component relating to the describing data record by using an architecture component digital model generator, displaying the graphic object of the architecture component relating to the describing data record on a display screen; and
a step of automatic modeling: for every describing data record in architecture component describing data, comparing the architecture component describing data records with the generated or updated graphic object of an architecture component to determine the consistency therebetween; if the result of comparison is inconsistent, interpreting the describing data record into plane shape describing data and locating point data of the architecture component relating to the describing data record by using an architecture component describing data interpreter; generating or updating a graphic object of the architecture component relating to the describing data record by using an architecture component digital model generator.

After the step of editing the describing data record by using the architecture component describing data editor and/or the blueprint data collector, the method further comprises a judging step: judging whether the plane locating string field value of the architecture component is valid, and if valid, then performing the step of generating or updating, according to the interpreted plane shape describing data and locating point data, a graphic object of the architecture component relating to the describing data record by using an architecture component digital model generator.

According to said method, both the architecture component describing data editor and the blueprint data collector operates in the form of editing an electric worksheet.

According to said method, the architecture component plane locating string is in conformity with the principles and elements of the architecture component plane locating rules.

According to said method, the describing data and the graphic object of the architecture component may be separately stored in computer-readable files which are independent each other; in such a case that a plurality of clients in a network environment cooperate for modeling, the network transmission objects include architecture component describing data record, and don't include the architecture component graphic object.

According to said method, the step of automatic modeling can be initiated respectively by the following events: a field value changing event in the architecture component describing data editor; a field value changing event in the blueprint data collector; a backend data changing event in the process of editing the architecture component describing data; a force instruction event.

The method further comprises the step of storing a copy of corresponding architecture component describing data, to automatically maintain the consistency of the describing data and the graphic object of the architecture component, when generating the architecture component graphic object.

The invention further provides a modeling module of an architecture engineering, the module comprises: a first computer program code module for establishing and editing an architecture component describing data; a second computer program code module for interpreting an architecture component plane locating string into a geometry shape and a locating point data which are corresponding to an architecture component; a third computer program code module for generating an architecture component graphic object; and a fourth program code module running on a handheld personal computer for establishing and editing the architecture component describing data.

According to said module, the first computer program code module for establishing and editing the architecture component describing data and the fourth program code module running on the handheld computer each have an interactive interface in the form of an electric worksheet.

The invention-related technical terms will be explained below:
(1) architecture component plane locating string: architecture component plane locating data used in the invention, and comprises the name of an axis for the architecture component, a relative distance, the number of the components, and associated characters, further detailed explanation can be found in "The Architecture Component Plane Locating Rules provided in the Invention".
(2) architecture component describing data: the data describing the geometry and physical characteristic of the architecture components. The architecture components comprise various kinds of components such as walls, girders, columns, foundations, and the architecture component describing data has different description forms for different components. Any kind of components herein comprise: a plane locating data, a height or thickness, a material and a material index, and most components comprise cross section shapes and size data. The difference between the present invention and others is that the architecture component describing data used in the invention includes the architecture component plane locating string.
(3) architecture component graphic object: a form of computer-readable data of the architecture component, mainly consisting of geometry shape data, size data, and position data, and other data such as physical parameters embedded into a geometry data. The characteristic of such kind of data is that the data can be directly displayed on a display by a computer-driven graphic display system in visual graphic form, and a graph thereof can also be printed and outputted by a printing output device. Here the architecture component graphic object is also simplified as graphic object or component graphic object.
(4) modeling, interaction, interactive modeling: all the three concepts mean procedures. In the invention, modeling and interactive modeling particularly mean architecture modeling and architecture interactive modeling, the modeling means a procedure to establish an architecture digital model in a computer. In computer application field, the interaction generally means such a procedure and concept that an operator performs a process of exchanging data with a computer, and the operator inputs data via an input device, and the computer outputs data via a display or a printing device to be examined by the operator. The interactive modeling is such a procedure that the operator interactively inputs architecture-related data to the computer to form a architecture digital model .
(5) engineering modeling: an established relatively complete and accurate architecture model, the established model may be used in fields related to engineering procedure such as engineering construction and engineering management etc. Engineering modeling is a concept distinguished from a relatively incomplete and inaccurate architecture model.
(6) architecture component graphic object driving data: a control data for creating the architecture component graphic object, and comprising a geometry control data and a physical describing data; wherein the geometry control data comprises geometry shape description data, control point coordinates data, and the like; and the physical control data comprises material category data, material grade data, and the like. For example, since geometry shapes of the architecture component are generally cubic, the architecture component graphic object driving data corresponding to an architecture component having cubic shape comprises spatial coordinates of the center of the cube, a length, a width, a height, an azimuth of one arris, a material name, and the like. Though specific configuration format of data used in different modeling systems may be different, the content required for the driving data is basically the same.
(7) architecture digital model: an architecture model formed by computer-readable data. This model can output a whole architecture and various elements, i.e., graphs and images of an architecture component, to a related output device such as a computer display, a printing device, and the like. The model can be divided into a two-dimensional digital model and a three-dimensional digital model according to the number of dimensions of the graph representation. In the text of the description, the architecture digital model means the three dimensional digital model. It can be learned that a architecture digital model is formed by a combination of the architecture component graphic objects. Therefore, in the context, the architecture digital model and the architecture component graphic object mostly have the same content. The architecture digital model is also called architecture visual model.
(8) architecture component describing data file: a storage object of the architecture component describing data on a computer-readable medium.
(9) architecture component graphic object file: a storage object on a computer-readable medium consisting of the architecture component graphic objects, the architecture component graphic object file may be also called architecture digital model file .
(10) drawing mode: a common term in the field of engineering modeling. It means such an interactive modeling mode that an operator determines position of the point corresponding to a control point of a geometry on the display panel by controlling a graphic cursor on a display panel in an interactive modeling procedure, so as to generate the geometry. This interactive modeling mode allows the operator to directly input the coordinate of control point of the geometry.
(11) the principle for making architecture component plane locating rules is as follows:
   a) the content in one character string can be found in an identical blueprint clearly, and is in conformity with the technical regulations and expression habit in the application field;
   b) a single character string can clearly express the entire component plane position at least. And it is easy to express several same kinds of components which are in conformity with a certain plane arrangement rule in a single character string by using extended rules;
   c) a connective character cannot contain related characters on a construction blueprint. Moreover, the convenience for keyboard-input and pen-input is taken into account.

The elements for forming the architecture component plane locating rule comprises: the architecture component-related axis name, the relative distances from the axis or other components, the number of the components, and the connective characters.

The architecture component plane locating rule covers a plurality of kinds of components which might be involved in architecture engineering, wherein the different kinds of components have different specific plane locating rule. In the illustration of the rule, "*" means an optional connection character, and the content in "[ ]" is optional.
a) Strip components, comprising girders, walls, foundation girders, ring girders, and house frames. The basic principles thereof are: the names of the axes for a component * the names of starting point axes * the names of terminating point axes. The first the extended rules are: basic rules * the names of axes or name group of the axes for the components which starting or terminating points are same. The second extended rules are: the first names of the axes for a component * the second names of the axes for a component * the third names of the axes for a component...* the first names of the axes for a component, wherein said axes are intersected one another. For example, the character string "A: 1,6" according to basic rules indicates that a continuous strip component which is in axis A, and starts from axis 1 and terminates at axis 6; the character string "A: 1,6[B,C,D]" according to the first extended rules not only indicates a continuous strip component which is in axis A, and starts from axis 1 and terminates at axis 6, but also indicates that other 3 continuous strip components starting from axis 1 and terminating at axis 6 are in axes B, C, and D, respectively; and the character string "A:8:E:1:A" according to the second extended rules indicates that the first component is located in axis A, and starts from axis 1 and terminates at axis 8; the second component is located in axis 8, and starts from axis A and terminates at axis E; the third component is located in axis E, and starts from axis 1 and terminates at axis 8; and the fourth component is located in axis 1, and starts from axis A and terminates at axis E.
b) Dot shaped components, comprising poles, construction poles, independent foundations, piles, pile caps, counterforts. Their basic rules are: the first axis for a component * the second axis for a component intersecting with the first axis [* the third axis for a component intersecting with the first axis,...]. The extended rules are: basic rules * the other axes not intersecting with the first axis. For example, the character string "A,1" according to the basic rules indicates that one dot shaped component at the intersection point of axis A and axis 1, while the character string "A,1,2,3" according to the basic rules indicates that three dot shaped components at the intersection points of axis A and axis 1, axis A and axis 2, axis A and axis 3, respectively; and the character string "A,1,2,3[B,C]" according to the extended rules indicates that six components which are located in axis B, axis C, and intersects with axes 1, 2, 3, respectively are included except the three components expressed by "A,1,2,3",.
c) plane shape components and rooms, the plane shape components comprises floor slabs, balconies, floor plates, canopies, roofs, and the like. The basic rules thereof are: the axis 1 for a component edge [*offset distance 1]* the axis 2 for the component edge [*offset distance 2]...* the axis 1 for the component edge. For example, the character string "A*0.6,2,B,1,A" according to the basic rules indicates the plane shape components or rooms which boundaries are in axis A, axis 2, axis B, and axis 1, respectively, wherein the boundary in axis A is extended outwardly by 0.6 measurement units, for example, 0.6m.
d) Wall-embedded components, such as doors, windows, lintels, and the like. There are a number of rules, and one of them is: the name of the axis for a wall * the distance from starting point of the wall [* repeated spacing for the same components * the number of same components], for example, "A:0.85,0.6*3" indicates that 3 embedded components in a wall for axis A, where the distance of the first component from the wall is 0.85m, and the net distance between the three components is 0.6m.
e) Other components which are not listed in the above four types can be extended under the three principles of the architecture component plane locating rules.

It can be learned from the technical solutions above, the architecture component describing data can, directly or indirectly, describe the spatial position, geometry shape, and physical attributes of an architecture component main body completely. Indirect describing means describing by way of the other architecture component describing data. The component plane locating character string indirectly describes the plane position by way of the describing data of axes and the describing data of other components. For facilitating understanding and editing, as well as combining general rules of architecture components, the complete describing data for one component may be divided into three aspects, wherein one aspect is the related data of the floor for the component, such as the number of the floor, floor height, and rating height; the other aspect is the data for describing plane arrangement as the main purpose; the rest aspect is components group data, since most components have same attributes, it is facilitated to edit in a manner of group data. Compared with the memory capacity required by the architecture component graphic object, the architecture component describing data is very small. For example, the complete component describing data for a section of wall is the content of the following three lines:
"1 3.60 0.00", means the data of the floor for a component;
"A: 1,4 ZQ24 0.00 3.60 0.00", means the plane arrangement data, group name, two heights, and offset;
"ZQ24 0.24 JZ M10 SJ MU5", mains the thickness data and material data.

Memory capacity for the above data is totally 67 bytes. In practice, the data is usually used in the form of database, but its memory capacity would not be larger than that in the form of text above.

However, volume of the graphic object data of one cube will be much larger. The data content contained in a cubic graphic object which is generated by ACIS as famous three dimensional modeling software, is listed below:
a record of one body, 32 bytes ;
a record of one lump, 32 bytes ;
a record of one shell, 40 bytes;
a record of 6 faces, 264 bytes;
a record of 24 coedges, 1056 bytes ;
a record of 12 edges, 864 bytes ;
a record of 8 vertexs, 192 bytes ;
a record of 12 curves 1344 bytes ;
a record of 8 points, 384 bytes ;
the total memory capacity is 5360 bytes .

The above content related to ACIS graphic objects is excerpted from "ACIS-based Geometry Modeling Technology and System Development," Haisheng Zhan, et al, published by Publishing House of Tsinghua University.

An another example is that the memory capacity for one cube generated by the famous AutoCAD software is 5276 bytes. It can be learned, the ratio of the memory capacity for the architecture component describing data and the architecture component graphic object is about 1: 80, and the memory capacity and the object above-mentioned belong to different level basically. Because the memory capacity for the architecture component describing data is very small, the architecture component describing data may be used as data object for interactive editing, storing, and transferring, so that it is more portable and manageable than the architecture component graphic object. The architecture component describing data can be applied in networks of various transfer rates. Furthermore, using the architecture component describing data as the data transferred between data processors would also be a necessary condition to realize a blueprint data collector which uses a handheld computer terminal as hardware.

Various aspects of the invention will be explained hereinbelow in combination of the accompanying drawings.

### DETAILED DESCRIPTION OF THE DRAWINGS

FIG.1 is a configuration diagram of a system according to a first embodiment of the present invention;
FIG.2 shows a view displayed on a computer screen of an architecture component describing data editor in the system according to the first embodiment of the present invention;
FIG.3 shows a view displayed on a screen of a blueprint data collector (HPC) in the system according to the first embodiment of the present invention;
FIG.4 is a block diagram showing a procedure for performing interactive modeling in a method according to the present invention;
FIG.5 is a block diagram showing a procedure of automatic modeling by an already existed architecture component describing data file in the method according to the present invention;
FIG.6 is a block diagram showing an operation of an architecture component describing data interpreter in the present invention;
FIG.7 shows a sample blueprint of a plan view of an architecture design in an architecture engineering;
FIG.8 shows a behavior procedure of inputting architecture component plane positions by using existing interactive modeling system and method thereof when an operator inputs design information on an engineering design blueprint to a computer;
FIG.9 shows a behavior procedure of inputting architecture component plane positions by using the method and system of the present invention when an operator inputs design information on an engineering design blueprint to a computer;
FIG.10 is a diagram for explaining advantages of adopting the blueprint data collector;
FIG. 11 is a diagram showing a data flow between data processing activities and data according to the present invention;
FIG. 12 is a configuration diagram of an interactive modeling system in which a single computer operates in cooperation with a plurality of handheld PCs;
FIG.13 shows an interactive modeling system in which a plurality of clients operate in cooperation with each other under network support;
FIG.14 is a diagram showing a trigger mechanism of an automatic modeling step; and
FIG.15 is a diagram showing the principle of checking the consistency of component describing data and architecture component graphic object according to a copy of a corresponding architecture component describing data record stored when generating the architecture component graphic object.

### DETAILED DESCRIPTION OF THE INVENTION

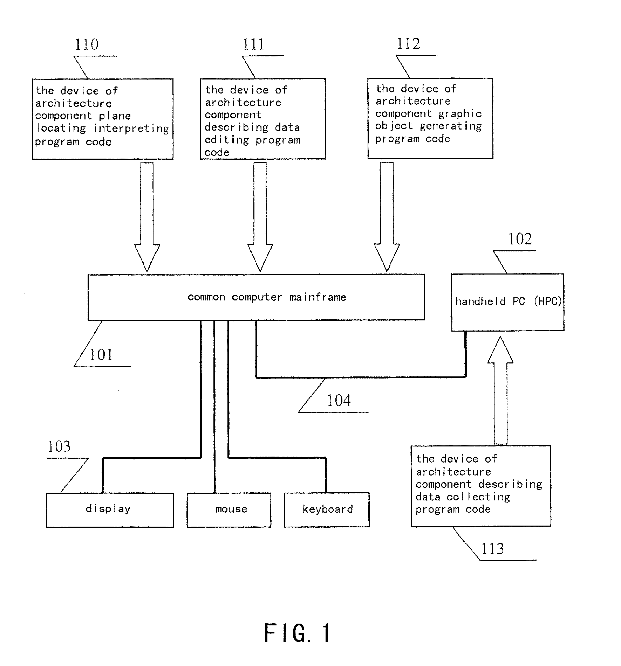

FIG.1 is a configuration diagram of a system according to a first embodiment of the present invention. In this system, a common computer 101 is connected to a handheld personal computer (HPC) 102 in a manner of any type of communications possibly between the computer 101 and the handheld PC 102, such as RS232 or a general-purpose USB interface. The handheld PC 102 is used as a terminal of the computer 101. Since most of handheld PCs using Windows CE operating system or Pocket PC series operating system have electric worksheet editing function and synchronous transmission capability, there are no technical obstacles in achieving a function of blueprint data collection on handheld PCs.

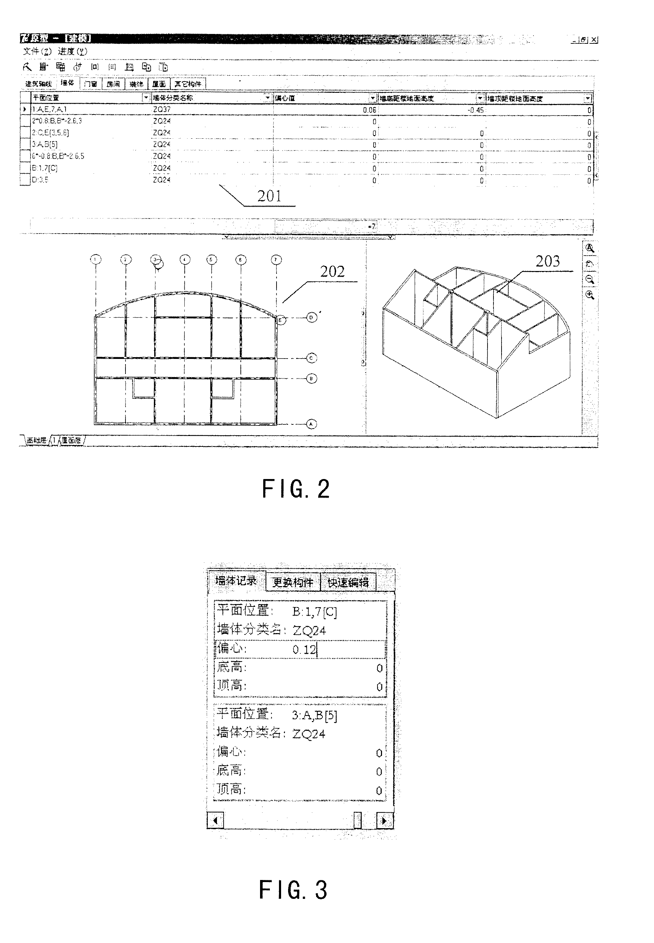

FIG.2 shows a view displayed on a computer screen of an architecture component describing data editor in the system according to the first embodiment of the present invention. In FIG.2, a region 201 is an interactive editing region, i.e. an interface of an architecture component describing data editor in the system. The software prototype employs an electric worksheet interface. A region 202 is a display window for a plan view of an architecture digital model display region, and a region 203 is a three-dimensional display window for the architecture digital model display region. This figure also reflects that a method for inputting architecture component describing data on a common computer by an operator is the same as a general method for using an electric worksheet software, and in the above two methods the drawing operation is not included.

FIG.3 shows a view displayed on a screen of a blueprint data collector (HPC) in the system according to the first embodiment of the present invention. Since a display screen of the handheld PC is relatively small, main display contents of a blueprint data collector are designed as the form of a component recording card. Two recording cards may be simultaneously arranged for the component describing data that has few fields, such as the walls data as shown in FIG.2. This figure reflects that a method for inputting architecture component describing data on a handheld PC by an operator is the same as a method by using a simple electric worksheet, in which the drawing operation is not included.

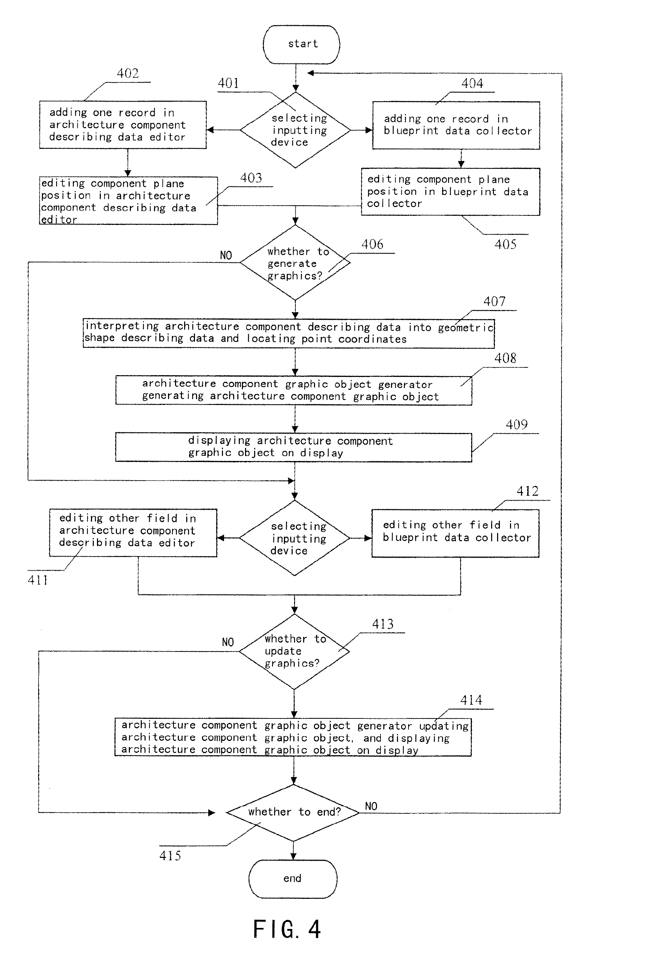

FIG.4 is a block diagram showing a procedure for performing interactive modeling in a method according to the present invention, which comprises:
Step 401: selecting the used inputting device by the operator. There are two choices as follows: a common computer inputting device, or a handheld PC that has established a communication connection with a computer.
Step 402 and Step 404: creating a new architecture component describing data record on the architecture component describing data editor or the blueprint data collector;
Step 403 and Step 405: editing the field of an architecture component plane locating character string in the architecture component describing data record on the architecture component describing data editor or the blueprint data collector;
Step 406: judging whether to generate an architecture component graphic object;
Step 407: an architecture component describing data interpreter simultaneously interpreting the field of the plane locating character string in the architecture component describing data record, generating architecture component plane shape describing data and locating point data, and storing them in a memory in the computer;
Step 408: an architecture component graphic generator extracting architecture component plane shape describing data and locating point data corresponding to said record from the memory in the computer, extracting other property values corresponding to the architecture component from other fields of said record, constituting component graphic object driving data, and generating a graphic object corresponding to the architecture component by using said component graphic object driving data;
Step 409: displaying said architecture component graphic object on a graphic display window of the display screen;
Step 411 and Step 412: editing other fields of said architecture component describing data record on the architecture component describing data editor or the blueprint data collector;
Step 413: judging whether to regenerate or update the architecture component graphic object;
Step 414: the architecture component graphic generator updating the architecture component graphic object, and displaying the architecture component graphic object on the display; and
Step 415: judging whether the mission is stopped, completed or required to forcefully stop by the operator.

Since the editing interfaces adopted by the architecture component describing data editor or the blueprint data collector are both electric worksheet (grid), there is no requirement for the editing order of each field in a single record, that is, any field therein can be edited in any order. In the present invention, a graphic object is allowed to be displayed on the display in real time so as to feedback to the operator the influence of the edited field on the architecture component graphic object. The architecture component plane locating character string contains a plane position information index and a component shape information index. If the architecture component plane locating character string field value in a single record is null or invalid, a graphic object which is the same or similar as the required architecture component graphic object cannot be generated. Thus, in this block diagram, a first editing field in each record is defined as an architecture component plane locating character string field. However, since the system can auto-detect the validity of the architecture component plane locating information in Step 406 and Step 413 in the process of editing each field so as to determine whether to generate a graphic object in real time when each field is edited, the operator still can edit any field in the electric worksheet in any order, and can not see any false graphic in the graphic display region. On the other hand, when the operator would update the graphic display over-frequently, he may close a switch parameter for controlling graphic update, so as to forcefully disable the function of updating the architecture component graphic object in real time.

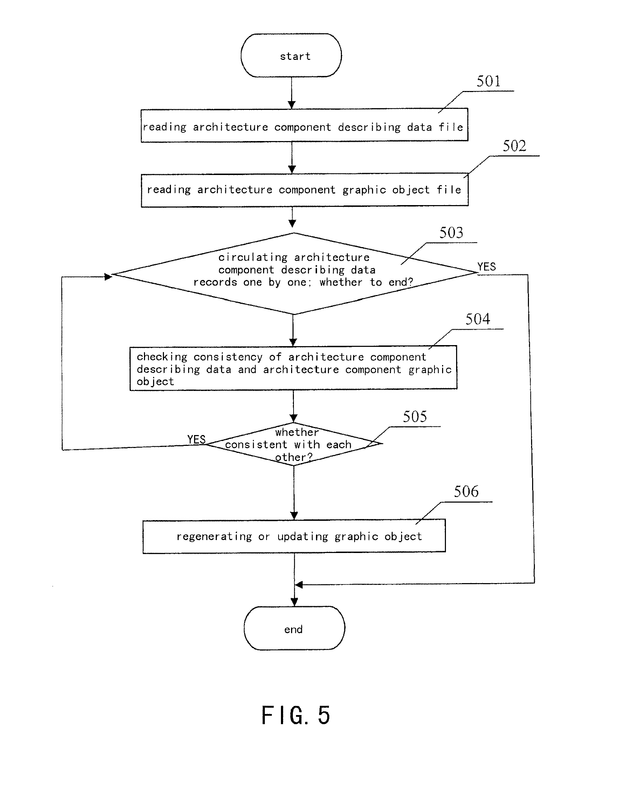

FIG.5 is a block diagram showing a procedure of automatic modeling by an already existed architecture component describing data file in the method according to the present invention, which comprises the steps of:
Step 501: reading an architecture component describing data file from a storage medium;
Step 502: if there is an architecture component graphic object file, reading the architecture component graphic object file from the storage medium;
Step 503: circularly processing the architecture component describing data records one by one;
Step 504 and Step 505: searching the architecture component graphic object corresponding to the current record, and checking the consistency of said record and the architecture component graphic object corresponding to said record. Said consistency involves the consistency of the architecture component object contained in said record and the architecture component main body corresponding to the architecture component graphic object that may be found, and the consistency of each field value of said record and the property value of the architecture component graphic object corresponding to said record;
Step 506: regenerating or updating one or more architecture component graphic objects corresponding to the architecture component describing data.

The block diagram shown by FIG.5 illustrates an automatic processing procedure of the architecture component describing data by which a graphic object is not generated in real time, or a procedure of automatic modeling by an architecture component describing data file generated by any other modeling system. As compared with the automatic modeling procedure shown by this block diagram, there is a simple mode in which the procedure is to perform Step 506 directly after Step 501, instead of performing Step 502, Step 503, Step 504 and Step 505, and an integral architecture component graphic object that matches the architecture component describing data can be generated as well. However, since this automatic generating procedure will consume longer time for automatic performing, it is inconvenient in practice.

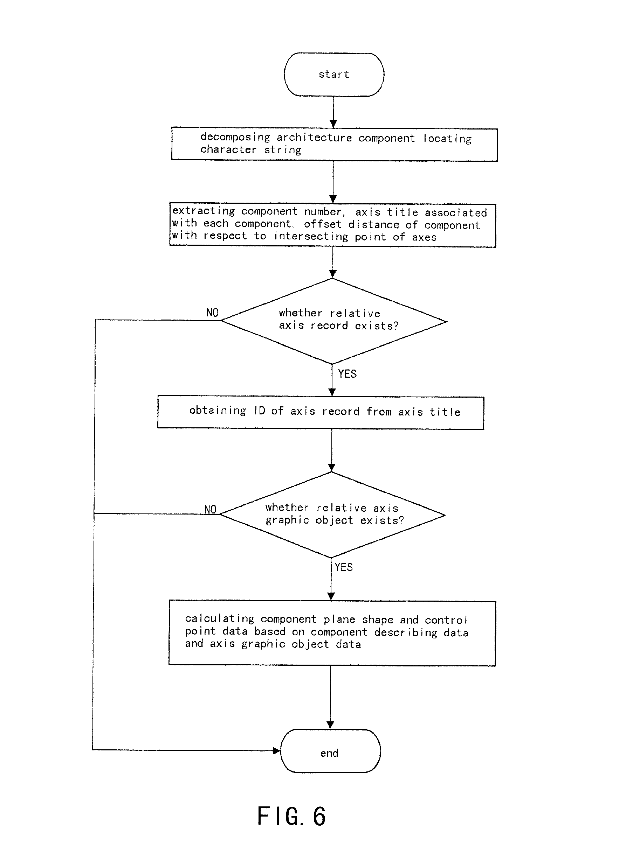

FIG.6 is a block diagram showing an operation of an architecture component describing data interpreter in the present invention, which depicts the operation steps of said interpreter.

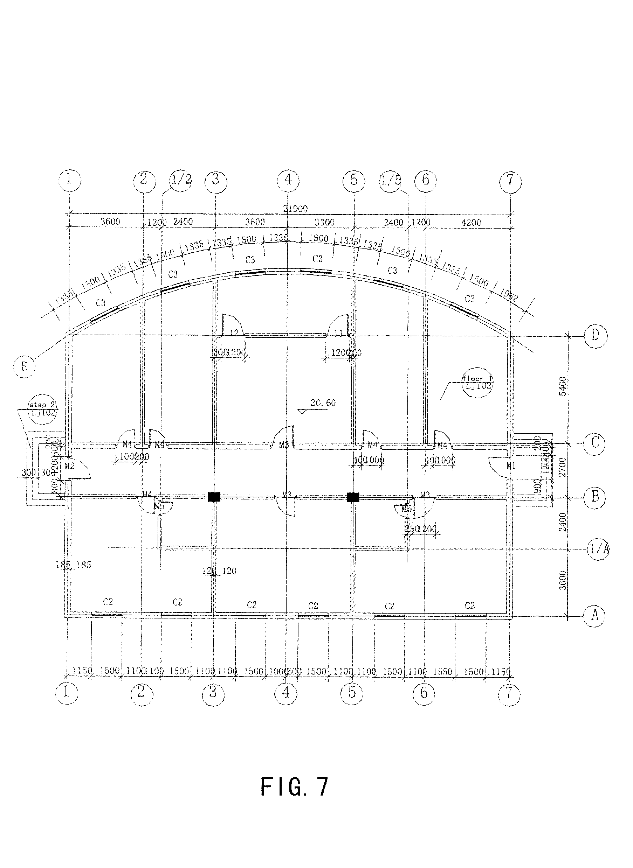

FIG.7 shows a sample blueprint of a plan view of an architecture design in an architecture engineering. It can be seen that this figure specifically expresses the plane relationships among walls, doors and windows, and architecture axes. The plane positions of the walls can be expressed as follows: "1:A:E:7:A:1" represents all the external walls; "B:1, 7[C]", "2:C, E[3, 5, 6]", "3:A, B[5]", "D:3, 5", "1/2: 1/A, B [1/5]", "1/A:1/2, 3", and "1/A:1/5, 6" represent all the internal walls. The plane positions of six C2 windows can be expressed as follows: "A:1. 16, 2. 2*3, 1. 6, 2. 2, 2. 65", etc. FIG.1 is used to illustrate: the expression of the components plane positions according to an architecture component plane locating rule conforms to the habits of seeing and reading drawings for engineering personnel, and can inputted conveniently via keyboard, writing board of handheld PC (HPC).

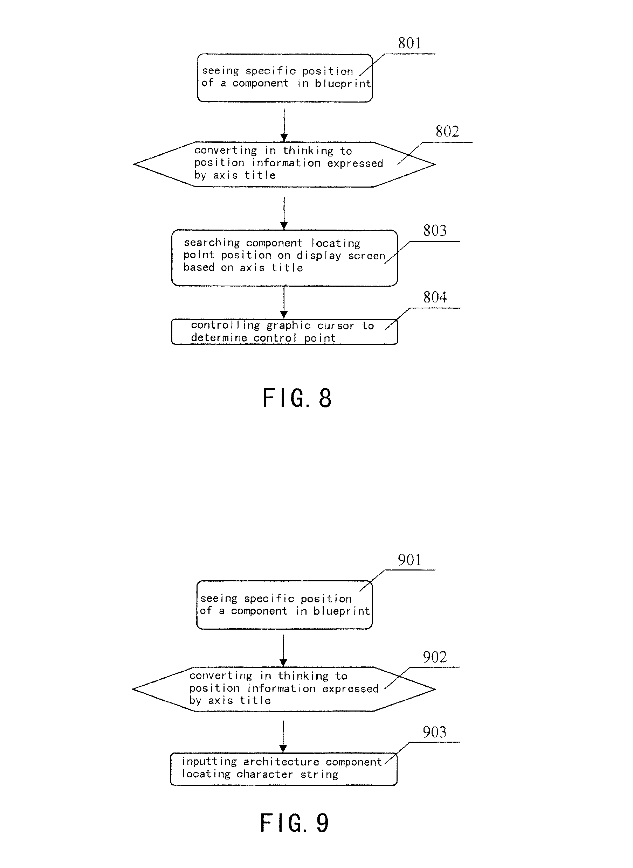

FIG.8 shows a behavior procedure of inputting architecture component plane positions by using existing interactive modeling system and method thereof when an operator inputs design information on an engineering design blueprint to a computer. A behavior step 801 and a thinking step 802 of the operator are necessary steps when engineering personnel are reading the drawing. That is, whether an operator needs to input information to the computer or not, these two steps cannot be omitted if he wants to understand drawings. Step 803 is an interactive step uniquely contained in a modeling system adopting existing drawing mode, and the step consumes the operator longer time and more energy.

FIG.9 shows a behavior procedure of inputting architecture component plane positions by using the method and system of the present invention when an operator inputs design information on an engineering design blueprint to a computer. Step 901 and Step 902 are the same as said Step 801 and Step 802, and Step 903 may be performed on the architecture component describing data editor or the blueprint data collector.

The comparison of FIG.8 and FIG.9 shows: the editing focus of electric worksheet can be located intuitively and the electric worksheet can be automatic focused; thus, as compared with the operation of searching accurate locating point in the graphic window, the operation of inputting architecture component plane positions to the computer according to the method of the present invention is not only a change in inputting manner, but it is more important that the operator's workload of interactive operation can be reduced according to this change in inputting manner. In addition, recording data in an electric worksheet manner is one of the most convenient information recording manners for handheld PC.

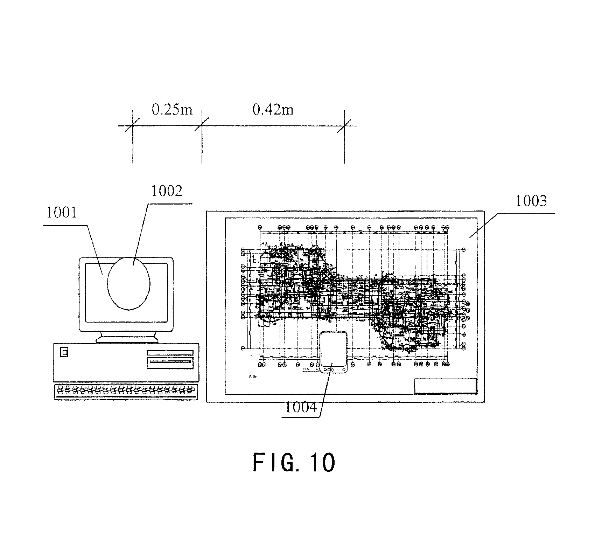

FIG.10 is a diagram for explaining advantages of adopting the blueprint data collector. In FIG.10, 1001 represents a 15-inch display screen of a common computer, 1002 represents the operator's head, 1003 represents an engineering design blueprint of A1 page-size, and 1004 represents a handheld PC. This arrangement relationship between the drawing paper and the computer system conforms to a principle of compactification. When the blueprint is hung up, the central height of the drawing paper is in the same level as the operator's eyes, such that the operator can look at the blueprint as convenient as possible while operating the computer. It can be seen that the operator needs to turn a relatively large angle to view the drawing paper while operating the computer, and the distance between the operator's eyes and the center of the drawing paper is at least 0.67m or more. However the distance goes beyond 0.3-0.5m which is the optimum reading distance. This means that the operator must leave his operating position to see most contents in the drawing clearly. In practice, since the pieces of drawing paper are many, engineering personnel are used to lay open the pieces of drawing paper on a platform to view the contents so as to switch among respective pieces of the drawing paper. According to this practical situation, it's more troublesome to view the pieces of drawing paper while operating the computer, and the working efficiency will be reduced due to the spacial position relationship. If an operator lays open the pieces of drawing paper on the platform according to habit and puts a handheld PC on the pieces of drawing paper. The operating manner of inputting relevant contents in the blueprint to the handheld PC while viewing the drawing is the same as that of generally recording contents in the blueprint on a notebook made of paper. The outline size of a handheld PC is generally 13cm*8cm*2cm or so, which corresponds to a pocket notebook, such that the contents in the pieces of the drawing paper can not be covered substantially. Moreover, since the handheld PC itself can display the inputted contents at any time, the operator doesn't need to view the computer's display frequently, such that he can view the contents in the pieces of the drawing paper and perform the inputting operation intently.

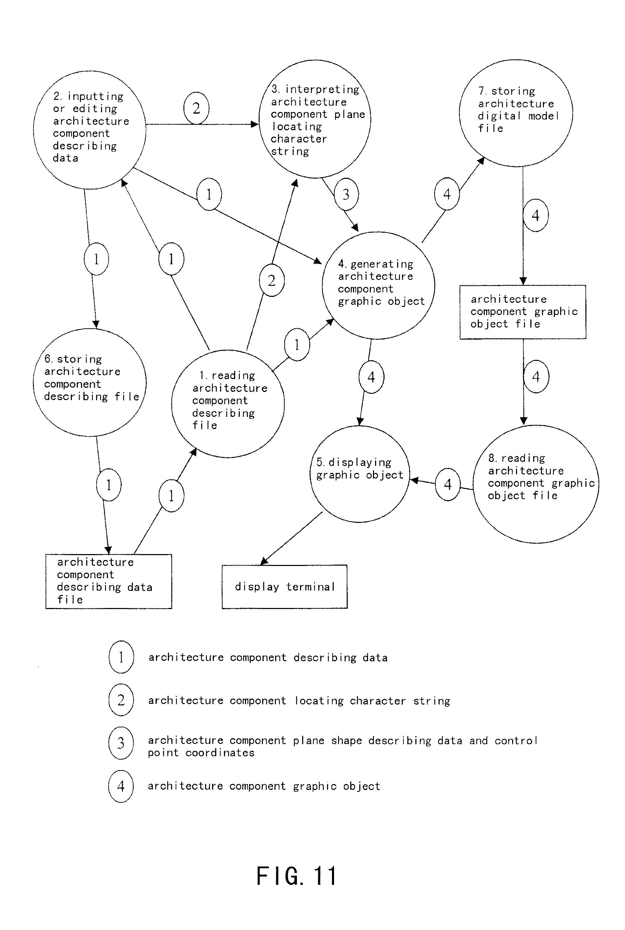

FIG.11 is a diagram showing a data flow between data processing activities and data according to the present invention, i.e. a portion of top-layer data flow diagram of the software according to the method of the present invention, and FIG.11 reflects main relationships between data processing activities and data.

Node 1 reads the architecture component describing data from the architecture component describing data file, transfers the architecture component describing data to Node 2 and Node 4 respectively, and transfers the architecture component locating character string to Node 3.

The process in Node 2 is to input or edit the architecture component describing data, and comprises: transferring the edited architecture component describing data to Node 4 and Node 6 and transferring the edited architecture component locating character string to Node 3 by using a common computer input device and a handheld PC.

The process in Node 3 is to interpret the architecture component plane locating character string, and transfer the generated architecture component plane shape describing data and locating point data to Node 4.

The process in Node 4 is to generate the architecture component graphic object, transfer the outputted data which is the architecture component graphic object to Node 5 and Node 7 respectively.

The process in Node 5 is to display the architecture component graphic object.

The process in Node 6 is to store the architecture component describing data in a file;

The process in Node 7 is to store the architecture component graphic object in a file; and

The process in Node 8 is to read the architecture component graphic object from the file for outputting in other forms, such as computer screen display.

The above data flow shows: the editing procedure for the architecture component only depends on the architecture component describing data inside the system, and does not have a dependency relationship with the architecture component graphic object inside the system; during the editing procedure, the meaning of existence of the architecture component graphic object is to be displayed on the display, such that the operator can see the editing result in real time. Therefore, during the procedures of interactive modeling by multi-terminal cooperation and interactive modeling by multi-client cooperation in network environment, it is different from the method for transferring graphic object according to prior arts that only the architecture component describing data is required to be transmitted.

In view of data flow, FIG.11 further shows: since the graphic object data is not directly processed in the interactive editing operation, there is no need to use the drawing mode.

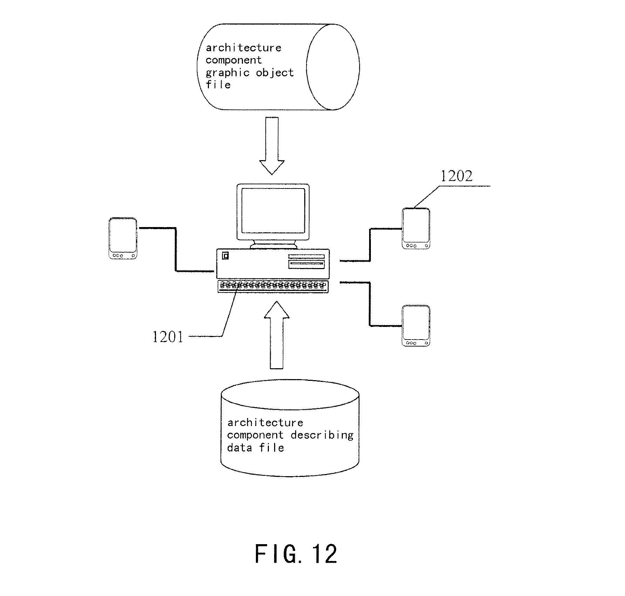

FIG. 12 is a configuration diagram of an interactive modeling system in which a single computer operates in cooperation with a plurality of handheld PCs.

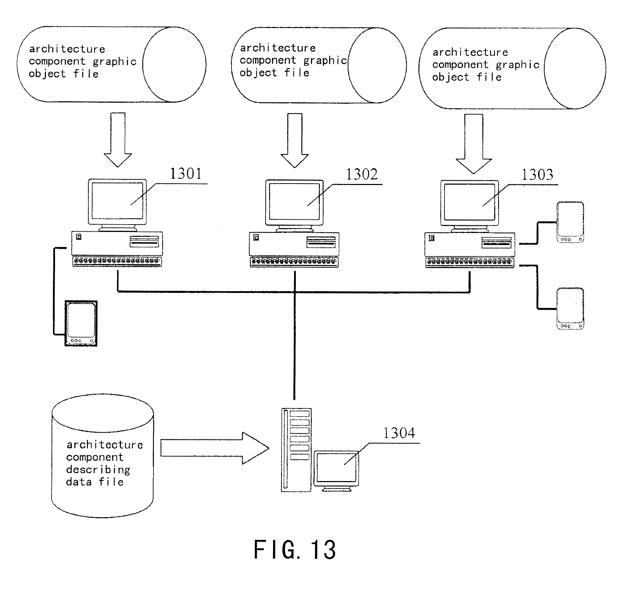

FIG.13 is a configuration diagram of an interactive modeling system in which a plurality of clients operate in cooperation with each other under network support.

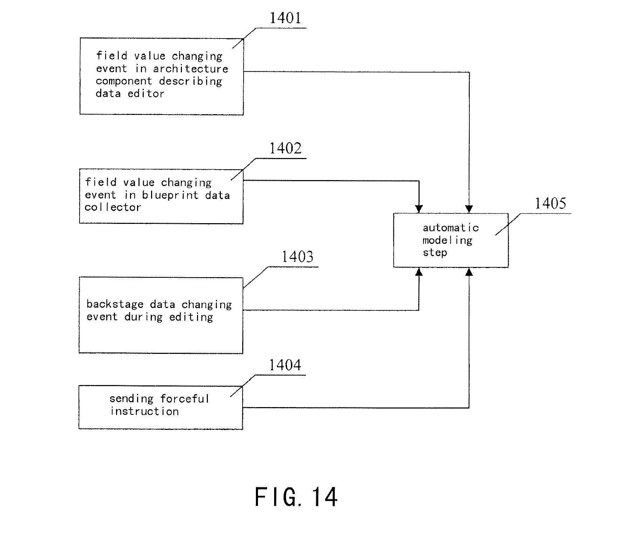

FIG.14 is a diagram showing a trigger mechanism of an automatic modeling step, which comprises:
a field value changing event in the architecture component describing data editor 1401, which is caused through editing the architecture component describing data in the architecture component describing data editor by the operator;
a field value changing event in the blueprint data collector 1402, which is caused through editing the architecture component describing data in the blueprint data collector by the operator;
a backend data changing event in the process of editing 1403, which may be caused through automatic updating the architecture component describing data by the computer program in the state of single computer working, may be caused through updating the architecture component describing data by the blueprint data collector in the state of cooperation with the blueprint data collector, or may be caused through updating the architecture component describing data in a share database by other client computer in the state of network cooperation; and
sending forceful instruction event 1404, in any state, the operator may forcefully send an instruction to the system based on the requirement,, so as to perform the automatic modeling step.

Each of the above four events may solely initiate the automatic modeling step, which makes applications of the automatic modeling step be flexible and suitable for many occasions. For example, when the system is initialized, firstly, it is needed to send a forceful instruction to perform the automatic modeling step, so as to achieve the consistency of the architecture component describing data and the architecture component graphic object. When it is needed to generate an architecture digital model from an architecture component describing data file generated by external programs, in general it is also needed to send a forceful instruction.

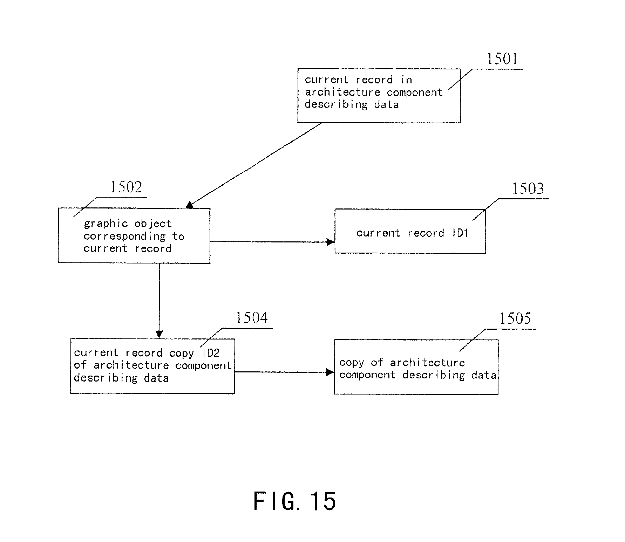

FIG.15 is a diagram showing the principle of checking the consistency of component describing data and architecture component graphic object according to a copy of corresponding architecture component describing data record stored when generating the architecture component graphic object, in which:
A current record in the architecture component describing data 1501 identifies whether a graphic object 1502 is a graphic object of the current record 1501 according to an identity number ID1 of said current record contained in the graphic object 1502 corresponding to the current record. Secondly, a copy of the current record is searched according to an identity number ID2 of the copy of the current record in the graphic object 1502. If a certain field value in the copy of the current record is different from a corresponding field value in the current record 1501, it indicates that it is needed to update the graphic object 1502.

Hereinafter, the embodiments and corresponding effects of the method according to the present invention will be totally described with reference to two application examples.

In the system in which a single computer operates in cooperation with a plurality of handheld PCs as shown by FIG.12, one computer may be connected to a plurality of handheld PCs, and the number of such connection is only limited by the number of I/O interfaces in the computer. Generally, one computer may be connected to three or four handheld PCs at most. In the working state, the computer loads an architecture component describing data editing program code module, an architecture component plane locating character string interpreting program code module, an architecture component graphic object generating program code module and necessary communication cooperation control programs, and each of the handheld PCs loads a blueprint data collecting program code module, so as to constitute a cooperating interactive modeling system composed of a single computer and a plurality of handheld PC terminals. This system allows several personnel to collect data simultaneously from various construction blueprint pages and to input the collected data to the system via computer keyboard and handheld PC respectively, so as to generate a corresponding architecture component describing data. During the operation of the system, only the architecture component describing data is transmitted between the computer and the handheld PC terminals; and the architecture component graphic object is displayed in a graphic window of the computer display, so as to provide the operator with a most direct editing result feedback. Meanwhile, the inputted drawing data may be displayed clearly on screens of the handheld PC terminals in a manner of an electric recording card. Finally, the architecture component describing data is stored in the computer database as a file, and an architecture data model generated by modeling is also stored in the computer hard disk in a graphic file format.

During the process of modeling through cooperating the single computer and the handheld PC terminals, since a trigger mechanism of the automatic modeling step is flexible, the entire cooperating procedure is relatively fluent. When the operator in front of a computer mainframe doesn't intend to be disturbed by operations of the handheld PCs, he may close triggering channels for the event 1401, the event 1402 and the event 1403, only reserve the operation of initiating the automatic modeling step by the forceful instruction, and turn off a switch for generating the architecture component graphic object in real time initiated by the blueprint data collector. In this way, all the editing results of the handheld PCs can only be reflected on the electric worksheet interface of the architecture component describing data editor, and frequent updating of the graphic window of the mainframe display may be avoided. The graphic display window only responds to the editing operation of the mainframe in real time. When the operator of the handheld PC requests to view the graphic, he may forcefully initiate the automatic modeling procedure via a menu-instruction, so as to generate or update all the architecture component graphic objects at one time. When the operator in front of the mainframe needs to view the realtime operating effect of the handheld PC terminals, he may turn on the switch for generating the architecture component graphic object in real time initiated by the blueprint data collector, and simultaneously bind operations of opening and closing the triggering channel for the event 1402. In this way, when a valid editing occurs in the handheld PCs, the system firstly initiates an automatic modeling step by the event 1402 once, then closes the triggering channel for the event 1402, and subsequently turns to a state in which all the valid editing of the handheld PC terminals can be viewed more intuitively at any time by means of the graphic object display.

The modeling time of such a system can be greatly reduced as compared with an interactive modeling system including a single computer used by a single personnel. With respect to the architecture construction industry, this system is advantageous as follows: construction corporations or organizations are usually requested to complete engineering bid documents in a short time after receiving the construction blueprint, in the case that the time is highly urgent, such a rapid interactive modeling system is highly required.

The handheld PC loading the blueprint data collector may independently collect the architecture component describing data without connecting to the mainframe. The collected result, i.e. the architecture component describing data is temporarily stored in a file memory of the handheld PC, such as a CF flash memory card. When the handheld PC is connected to the mainframe, the architecture component describing data is transmitted to the mainframe. The system in the mainframe compares the architecture component describing data, and then the system in the mainframe triggers the triggering channel for the event 1404 based on the architecture component describing data transmitted from the blueprint data collector, and perform an automatic modeling step once, thereby enabling the handheld PC, i.e. the blueprint data collector to accomplish a procedure from independently operating to online operating.

Such a function may be used for the examinations of the architecture engineering drawing paper. Each of the attendees may only carry a handheld PC to join the examination, and promptly record the changed contents in the drawings during the examination, such that it is clearly shown the practicability of this function.

In the interactive modeling system in which a plurality of clients operate in cooperation with each other under network support as shown by FIG. 13, the architecture component describing data files are stored in the storage medium of a data server 1304, and the architecture component graphic object files, i.e. the architecture digital model files are stored in the storage medium of each client. The client computers may connect to handheld PC terminals, such as a client computer 1301 or a client computer 1303 shown in FIG. 13. In the working state, each client loads an architecture component describing data editing program code module, an architecture component plane locating character string interpreting program code module, an architecture component graphic object generating program code module and necessary communication cooperation control programs, and each of handheld PCs loads a blueprint data collecting program code module. The clients share the architecture component describing data files in the data server 1304 via networks, and the handheld PC terminals connected to the clients indirectly access the architecture component describing data files in the data server 1304 via the connected client computers thereof. Since only the architecture component describing data is transmitted over networks, the operation will not be influenced by the transmission rate of a local area network or an INTERNET Wide Band during the cooperation.
During the cooperation, when the client 1301 doesn't intend to be influenced by the editing of other clients, the triggering channel of the event 1403 for the automatic modeling step may be closed. In this way, the editing operations of the client 1302 and the client 1303 can only initiate the graphic updating on their own displays, and cannot influence the graphic updating on the display screen of the client 1301. However, editing results of other client computers may be displayed on the architecture component describing data editor. Such that the problem of mutual disturbance generated when the graphic on each client is updated is solved in the case that the cooperating modeling is performed by using the prior arts. Moreover, the cooperating degree can be improved.

When architecture construction corporations or organizations that have appropriate network conditions perform interactive modeling for the architecture engineering to be undertaken or to be constructed, such system is suitable. Particularly, if this system is used in large architecture engineering, a better effect will be achieved. Moreover, this system may also be used in such application fields as architecture electric files established in city construction archives, electric management for developing architecture by realty development department, etc.

### APPLICABILITY TO THE INDUSTRY

In the modeling module of architecture engineering and system and method thereof according to the present invention, the inputted architecture component describing data includes the architecture component plane locating character string because the architecture component describing data is inputted by electric worksheet. During the inputting, the system interprets the character string into geometric shape and locating point data, and generates and displays the component graphic object, and interprets the architecture component image object files into the architecture component describing data files when the system is used. Moreover, the system comprises handheld PC terminals, which collect data from the blueprint and collaborate with the computer mainframe. The present invention simplifies complex inputting process and improves the user's operating efficiency. The memory capacity of the architecture component describing data is very small so that it's simple as the data object of interactive editing, storage and transmission rather than the architecture component graphic object and can be used in networks with various transmission rate. Using the architecture component describing data as the data transmitted among data processors is a necessary condition for achieving the blueprint data collector which hardware is handheld PC terminals. The present invention may be used in the field of architecture engineering design, such as designing, estimating and engineering exhibiting of architecture, and may be used in relevant fields of architecture engineering as well.

## Claims

1. A modeling method of an architecture engineering for establishing an architecture digital model by inputting design content in design blueprint of an architecture engineering into a computer, the method comprising the steps of:
a step of interactive modeling: establishing a describing data record which comprises an plane locating string field and other characteristic fields of an architecture component by using an architecture component describing data editor and/or a blueprint data collector; editing the describing data record by using the architecture component describing data editor and/or the blueprint data collector; interpreting the describing data record into plane shape describing data and locating point data of the architecture component relating to the describing data record by using an architecture component describing data interpreter; generating or updating, according to the interpreted plane shape describing data and locating point data, a graphic object of the architecture component relating to the describing data record by using an architecture component digital model generator, displaying the graphic object of the architecture component relating to the describing data record on a display screen; and
a step of automatic modeling: for every describing data record in architecture component describing data, comparing the architecture component describing data records with the generated or updated graphic object of an architecture component to determine the consistency therebetween; if the result of comparison is inconsistent, interpreting the describing data record into plane shape describing data and locating point data of the architecture component relating to the describing data record by using an architecture component describing data interpreter; generating or updating a graphic object of the architecture component relating to the describing data record by using an architecture component digital model generator.

2. The method according to claim 1, **characterized in that** after the step of editing the describing data record by using the architecture component describing data editor and/or the blueprint data collector, a judging step is followed: judging whether the plane locating string field value of the architecture component is valid, and if valid, then performing the step of generating or updating, according to the interpreted plane shape describing data and locating point data, a graphic object of the architecture component relating to the describing data record by using an architecture component digital model generator.

3. The method according to claim 1, **characterized in that**, both the architecture component describing data editor and the blueprint data collector operates in the form of editing an electric worksheet.

4. The method according to claim 1, **characterized in that** the plane locating string of the architecture component is in conformity with principles and elements of plane locating rules for the architecture component.

5. The method according to claim 1, **characterized in that** the describing data and the graphic object of the architecture component can be separately stored in computer-readable files which are independent each other; in such a case that a plurality of clients in a network environment cooperate for modeling, the network transmission objects comprise architecture component describing data record, instead of the architecture component graphic object.

6. The method according to claim 1, **characterized in that** the step of automatic modeling can be initiated respectively by the following events:
a field value changing event in the architecture component describing data editor;
a field value changing event in the blueprint data collector;
a backend data changing event in the process of editing the architecture component describing data;
a force instruction event.

7. The method according to claim 1, **characterized in that** when generating the architecture component graphic object , storing a copy of corresponding architecture component describing data, to automatically maintain the consistency of the architecture component describing data and the architecture component graphic object.

8. An architecture engineering modeling system, comprising:
architecture component describing data containing an architecture component plane locating string field and other architecture component characteristic fields;
an architecture component describing data editor for generating or editing architecture component describing data, and transferring the generated or edited architecture component describing data to the architecture component describing data interpreter;
an architecture component describing data interpreter for interpreting the architecture component plane locating string and other architecture component characteristic fields into corresponding component plane shape describing data and locating point coordinates, and transferring the corresponding component plane shape describing data and locating point coordinates to the architecture digital model generator; and
an architecture digital model generator for generating or updating an architecture component graphic object, and displaying the architecture component graphic object by a display.

9. The system according to claim 8, **characterized in that** further comprises a blueprint data collector for editing the architecture component describing data, wherein the architecture component describing data editor and the blueprint data collector can cooperate, or can operate separately.

10. The system according to claim 8, **characterized in that** the blueprint data collector is a handheld personal computer, and coupled to the architecture component describing data interpreter.

11. The system according to claim 8, **characterized in that** the architecture component plane locating string is in conformity with principles and elements of architecture component plane locating rules.

12. A modeling module of an architecture engineering, comprising:
a first computer program code module for establishing and editing architecture component describing data;
a second computer program code module for interpreting an architecture component plane locating string into a geometry shape and locating point data which are corresponding to an architecture component;
a third computer program code module for generating an architecture component graphic object; and
a fourth program code module running on a handheld personal computer for establishing and editing the architecture component describing data.

13. The module according to claim 12, **characterized in that** both the first computer program code module for establishing and editing the architecture component describing data, and the fourth program code module running on a handheld computer have an interactive interface in the form of an electric worksheet.

14. The module according to claim 12, **characterized in that** the fourth program code module running on the handheld computer can independently operate to collect blueprint data in case that the handheld personal computer is not coupled to a computer mainframe.
